# EUROPÄISCHE PATENTSCHRIFT

(11) **EP 0 472 752 B1**
(45) Veröffentlichungstag und Bekanntmachung des Hinweises auf die Patenterteilung: **18.10.1995**
(21) Anmeldenummer: 90116441.8
(22) Anmeldetag: 28.08.1990
(51) Int. Cl.: H04B 1/66, G08C 23/00

(54) **Fernbedienungseinrichtung mit einer Spreizcode-Übertragungsstrecke**
Remote control apparatus with spread spectrum transmission link
Dispositif de commande à distance avec joint de transmission à spectre étendu

(43) Veröffentlichungstag der Anmeldung: 04.03.1992
(73) Patentinhaber: Deutsche ITT Industries GmbH, 79108 Freiburg (DE)
(72) Erfinder: Heberle, Klaus, Dipl.-Ing.(FH), D-7801 Reute (DE); Schumacher, Torsten, D-5800 Hagen 1 (DE)

(56) Entgegenhaltungen:
- EP-A- 0 131 458
- EP-A- 0 377 055
- FR-A- 2 606 234
- US-A- 4 774 715
- US-A- 4 875 221
- NATIONAL TELECOMMUNICATIONS CONFERENCE 1981 vol. 4, November 1981, NEW YORK(US) Seiten G851 - G856; HIROSAKI ET AL.: "SPREAD-SPECTRUM MULTIPLE ACCESS DATALOOP"

## Beschreibung

Die Erfindung betrifft eine elektrooptische Mehrfachübertragungsstrecke für Fernbedienungssignale, die anstatt der üblichen, geträgerten oder pulscodemodulierten Signale Spreizcode-Signale für die Infrarot-Übertragungsstrecke verwendet, vgl. den Oberbegriff des Anspruchs 1.

Eine derartige Spreizcode-Übertragungsstrecke für eine Fernbedienung ist in FR-A 2 606 234 beschrieben. Es handelt sich dabei um eine Fernbedienung mit einer universellen Bus-Einrichtung, die als elektromagnetische oder optoelektronische Übertragungsstrecke ausgebildet sein kann. Der Spreizcode wird dabei mittels einer Pseudozufallszahlenfolge gebildet. Die Dekodierung setzt eine Synchronisation des Empfängers mit dem Spreizcodesignal über eine Korrelationsstufe voraus, dem ein Amplitudenkomparator folgt. Bei einer Mehrfachübertragung sind entsprechend viele Korrelations- und Auswertestufen erforderlich.

In US-A 4 774 715 und "National Telecommunications Conference", 29. November - 03. Dezember 1981, Band 4, Seiten G8.5.1 bis G8.5.6 sind Einrichtungen zur Erzeugung und zum Empfang von Spreizcode-Signalen beschrieben. Dabei werden die zyklischen Eigenschaften von Pseudozufallszahlenfolgen und ihre digitale Verarbeitung mit den zugehörigen Schaltungseinrichtungen ausführlich dargestellt.

Das bekannte Spreizcode-Verfahren, beispielsweise für eine Satellitenübertragungsstrecke aus EP-A 360 476, ist dort von Vorteil, wo die Sendeenergie gering ist und die Frequenz des zu übertragenden Signals niedrig im Vergleich zum Datentakt des Spreizcode-Signals ist. Im Vergleich zu Schmalbandsystemen, die dann versagen, wenn ein Störsignal oder seine Oberwelle genau in das Übertragungsband fällt, kann beim Spreizcodeverfahren durch die Ausnutzung der großen Bandbreite des Übertragungskanals das übertragene Signal durch festfrequente Störsignale oder Rauschsignale mit hervorgehobenen Frequenzbereiche weniger gestört werden. Da Fernbedienungseinrichtungen auch im häuslichen Bereich eine zunehmend gestörte Umgebung vorfinden, bietet sich mit der Spreizcode-Übertragung ein vorteilhaftes Verfahren zur Überwindung dieser Schwierigkeiten an.

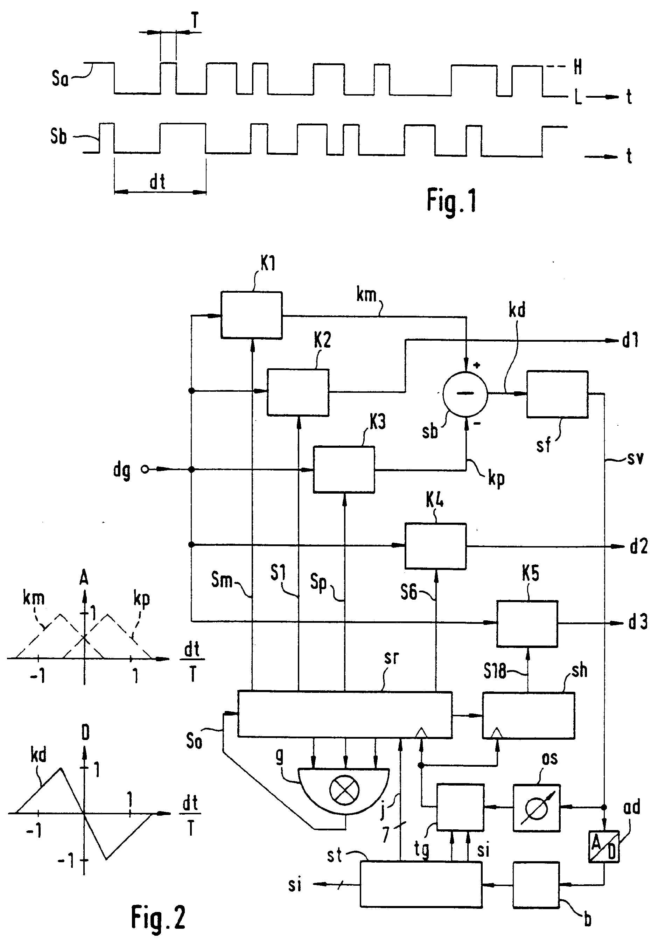

Beim Spreizcode-Signal handelt es sich um ein getaktetes binäres Signal, dessen Zustandsfolge eine Pseudozufallsfolge mit großer Periodendauer ist. Dabei ist das Signal im zeitlichen Mittel genauso lang im H- wie im L-Zustand, vgl. Fig.1.

Außer Fernbedienungseinrichtungen, die Befehle als codierte Signale übermitteln, gibt es auch Fernbedienungseinrichtungen mit Positionssteuerung. Bei letzteren werden die zu übertragenden Fernsteuerbefehle nicht mittels codierter Signale übermittelt, sondern durch eine manuelle Änderung der relativen Winkelposition von Fernbedienungsgeber und Fernbedienungsempfänger. Die Steuerung erfolgt dabei aus dem Handgelenk heraus, gleichsam mit einem großen Lichtgriffel, der auf einzelne Menü-Felder zeigt, die den jeweils auszuführenden Fernbedienungsbefehlen zugeordnet sind. Dabei ist die manuell gesteuerte Bewegung des Fernbedienungsgebers langsam im Vergleich zu den möglichen Taktfrequenzen. Der Fernbedienungsgeber gibt mehrere Dauerstrichsignale ab, die im Fernbedienungsempfänger bezüglich ihrer relativen Größen ausgewertet werden. Durch die Dauerstrichsignale wird die Batterie im Fernbedienungsgeber selbstverständlich sehr belastet und macht einen häufigen Batteriewechsel erforderlich. Eine elektrooptische Anordnung zur Fernbedienung mit Positionssignalen ist beispielsweise in EP-A 377 055 beschrieben.

Um die mittlere Sendeleistung zu reduzieren, werden bei der Pulscode-Übertragung und bei den geträgerten Verfahren die Infrarotdioden mit möglichst kurzen aber sehr hohen Impulsen und dafür langen Pausen angesteuert, was für deren Lebensdauer ungünstig ist. Beim Spreizcode-Verfahren bleibt bei gleichem mittleren Sendepegel die maximale Ansteuerung der Sendediode gering, nämlich lediglich der doppelte mittlere Aussteuerungspegel.

Es ist daher Aufgabe der in den Ansprüchen gekennzeichneten Erfindung, für positionsgesteuerte Fernbedienungseinrichtungen eine elektrooptische Übertragungsstrecke nach dem Spreizcode-Verfahren anzugeben, die störsicher ist, eine geringe maximale Sendeleistung aufweist und sich auf einfache Weise möglichst weitgehend monolithisch integrieren läßt.

Die Erfindung und weitere Vorteile werden nun anhand der Figuren der Zeichnungen näher erläutert:
Fig.1 zeigt im Zeitdiagramm Zwei Spreizcode-Signale,
Fig.2 zeigt schematisch als Blockschaltbild ein vereinfachtes Ausführungsbeispiel der Empfängerschaltung im Normalbetrieb,
Fig.3 zeigt schematisch als Blockschaltbild ein verbessertes Ausführungsbeispiel der Empfängerschaltung,
Fig.4 zeigt schematisch als Blockschaltbild einen Korrelator und
Fig. 5a bzw. Fig.5b zeigt in horizontaler bzw. vertikaler Ansicht schematisch die elektrooptische Sendeeinrichtung eines positionsgesteuerten Fernbedienungsgebers.

In Fig. 1 sind in zwei Teilen ein Spreizcode-Signal Sa und ein verschobenes Spreizcode-Signal Sb auschnittsweise dargestellt. Die Datenfolge beider Signale ist identisch, jedoch ist das untere Signal Sb um das Zeitintervall dt gegenüber dem oberen Signal Sa verschoben. Die kleinste Zeiteinheit in den beiden Spreizcode-Signalen wird durch die Taktperiode T gebildet, die beispielsweise 2 Mikrosekunden beträgt. Wie bereits oben angegeben, befinden sich die Signale im zeitlichen Mittel gleichlang im H- und im L-Zustand H, L. Die Verweildauer im H- bzw. L-Zustand beträgt dabei jeweils ein einfaches ganzzahliges Vielfach der Taktperiode T, die Verweildauer selbst ist aber eine Pseudozufallsfolge. Derartige Spreizcode-Signale lassen sich bekanntlich auf einfache Weise durch ein Schieberegister bilden, dessen Serieneingang vom Ausgang eines Vielfach-Antivalenzgliedes gespeist ist, dessen Eingänge mit einigen Schieberegisterstufen verbunden sind, vgl. beispielsweise in Fig.2 das Schieberegister sr und das dreitorige Antivalenzglied g. Am Eingang des Schieberegisters sr ist ein Spreizcode-Grundsignal S0 abzugreifen, und an jedem fortlaufenden Schieberegisterausgang ein entsprechendes 1-er, 2-er, 3-er, ... - Spreizcode-Signal S1, S2, S3... . Bei einer ausreichend langen Spreizcode-Periodendauer sind diese Signale untereinander nicht korreliert, so daß mit einem Spreizcode-Grundsignal SO gleichzeitig eine ausreichend große Anzahl von zusätzlichen Spreizcode-Signalen zur Verfügung steht. Selbstverständlich können die Spreizcode-Signale auch auf andere Weise erzeugt werden, beispielsweise durch sequentielles Auslesen aus einem Speicher. Der besseren Übersicht wegen wird künftig auf der Empfängerseite der Begriff "Spreizcode - " meist durch "Referenz - " ersetzt.

Mit dem siebenstufigen Schieberegister sr aus Fig. 2 und der dreifachen Signalrückführung lassen sich beispielsweise 18 verschiedene Spreizcode-Grundsignale So erzeugen, die eine Pseudozufallsfolge von 127 Taktperioden aufweisen. Es ist selbstverständlich, daß die Spreizcode-Signale der Sender und Empfängerseite zusammenpassen müßen, so daß in der Regel die Spreizcode-Signalerzeugung im Fernbedienungsgeber und Fernbedienungsempfänger auf gleiche Weise erfolgt.

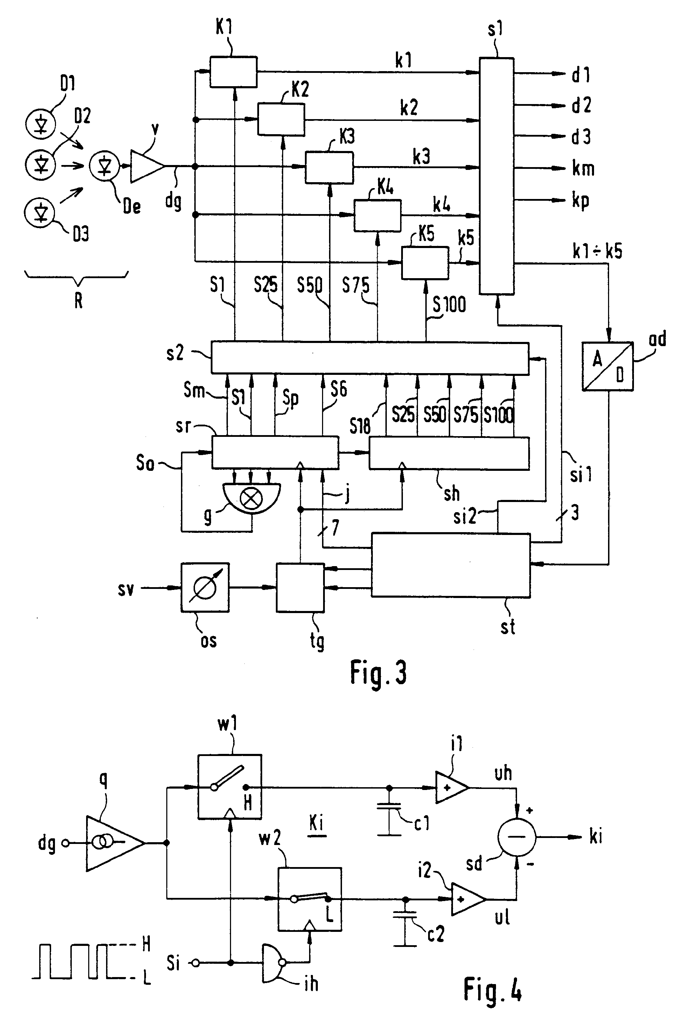

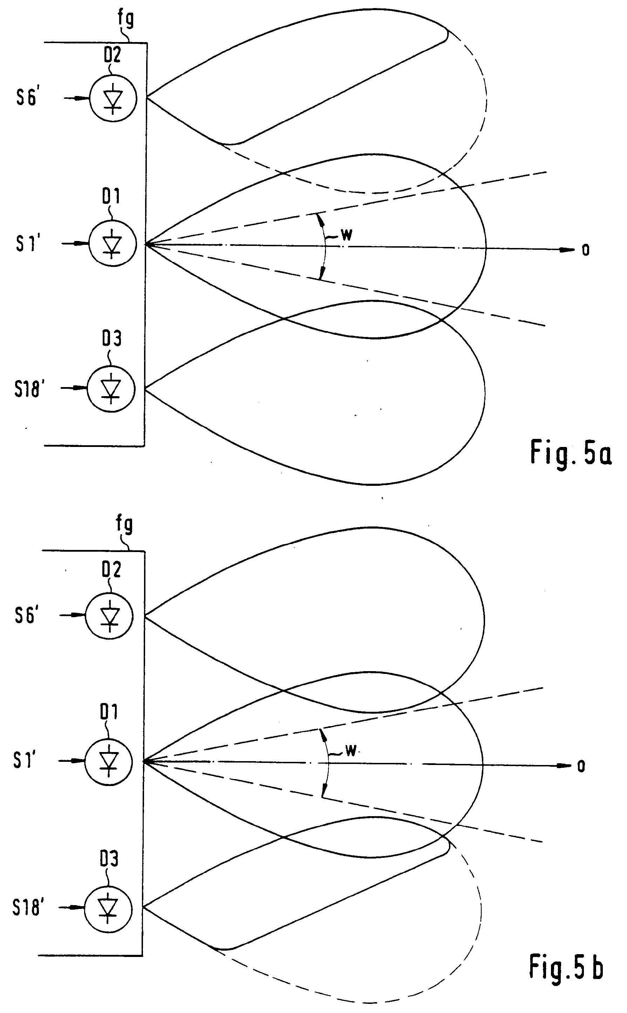

Die mittels der Infrarot-Senderdioden D1, D2, D3 gesendeten Spreizcode-Signale S1′, S6′, S18′(vgl. Fig. 3, Fig. 5a und Fig. 5b) werden gemeinsam mittels einer Empfangsdiode DE auf der Empfängerseite der Übertragungsstrecke R aufgenommen, mittels eines Verstärkers v gemeinsam verstärkt und bilden als elektrisches Signal ein Spreizcode-Signalgemisch dg.

In Fig.2 ist dargestellt, wie im Normalbetrieb aus diesem Spreizcode-Signalgemisch dg die einzelnen Komponenten, nämlich das erste, das zweite und das dritte Diodensignal d1, d2, d3 wieder gewonnen werden. Ferner sind auch die Einrichtungen dargestellt, um die Decodierschaltung K2, K4, K5 mit den empfangenen Spreizcode-Signalen zu synchronisieren. Die Gesamtschaltung enthält 5 Korrelatoren K1 bis K5, die auf bekannte Weise, beispielsweise entsprechend Fig.4, realisiert sind. Alle Signaleingänge dieser Korrelatoren sind mit dem Spreizcode-Signalgemisch dg gespeist. Da auf der Senderseite das 1-er-, 6-er- und 18-er-Spreizcode-Signal S1′, S6′, S18′ verwendet wird, muß auf der Empfängerseite das entsprechende 1-er-, 6-er- und 18-er-Referenzsignal S1, S6, S18 für die Korrelationsbildung erzeugt werden. Das Schieberegister sr ist dabei durch eine Schieberegisterverlängerung sh vergrößert worden, um das 18-er-Referenzsignal S18 zu gewinnen.

Der Korrelator K2, dessen Steuereingang mit dem 1-er-Referenzsignal S1 gespeist ist, liefert an seinem Ausgang als Korrelationssignal das erste Diodensignal d1. Entsprechend liefert der Korrelator K4 bzw. K5, der mit dem 6-er- bzw. 18-er-Referenzsignal S6, S18 gespeist ist als Ausgangssignal das zweite bzw. dritte Diodensignal d2, d3.

Zur Synchronisation der Referenzsignale mit den gesendeten Spreizcode-Signalen enthält die Schaltungsanordnung eine Phasenregelschleife, in der in Signalflußrichtung folgende Teilschaltungen hintereinandergeschaltet sind: ein Phasendiskriminator aus einem ersten und einem zweiten Korrelator K1, K3 und einem Subtrahierer sb, ein Schleifenfilter sf, ein ziehbarer Oszillator os, und ein Taktgeber tg, dessen Ausgang den Schiebetakt für das Schieberegister sr und die Schieberegisterverlängerung sh liefert. Damit der ziehbare Oszillator os möglichst frequenzstabil ist, ist er beispielsweise als Quarz-Oszillator ausgeführt. Entsprechend gering ist damit sein Ziehbereich. Die Vergrößerung des Ziehbereichs, insbesondere im Suchbetrieb, erfolgt mittels des Taktgebers tg, der in seinem Ausgangssignal zusätzliche Taktimpulse einfügen kann, aber auch Taktimpulse auslassen kann, wodurch seine Ausgangsfrequenz in einem weiten Bereich einstellbar ist. Diese Taktmodifikation im Taktgeber tg wird durch Steuersignale si einer Steuereinheit st bewirkt. Diese schaltet auch vom Normalbetrieb in den Suchbetrieb, wenn die Phasenregelschleife ausgerastet ist. Dieser Zustand wird von der Steuereinheit st erkannt, wenn das Diskriminatorsignal kd und damit das Ausgangssignal des Schleifenfilters sf kleiner als ein vorgegebener Wert ist. Die Bewertung erfolgt in einer Schwellwertstufe b, deren Ausgang mit der Steuereinheit st verbunden ist. Da die Steuereinheit st eine digitale Schaltung ist, wird das Schleifensignal sv vor oder nach der Schwellwertstufe b mittels eines Analog-Digitalumsetzers ad digitalisiert.

Beim Phasendiskriminator K1, K3, sb macht man sich die Autokorrelationsfunktion A des 1-er-Spreizcode- und des 1-er-Referenzsignals S1′, S1 zu Nutze. Signale mit gleicher Pseudozufallszahlenfolge, die miteinander korrelieren, liefern bei einer Phasenverschiebung dt/t = 0 einen Autokorrelationswert A = 1, der nach beiden Seiten gleichmäßig abnimmt und im Abstand von einer Taktperiode T etwa den Autokorrelationswert A = 0 erreicht und dort für alle weiteren Verschiebungswerte bleibt. Mittels geeigneter Auskopplungseinrichtungen am Schieberegister sr, die durch die Master- oder Slave-Taktphase gesteuert sind, wird ein unteres Referenzsignal Sm und ein oberes Referenzsignal Sp gebildet, die gegenüber dem 1-er-Referenzsignal S1 eine halbe Taktperiode T/2 vor- bzw. nacheilen.

Mit dem empfangenen 1-er-Spreizcode-Signal S1′ bildet das untere bzw. das obere Referenzsignal Sm, Sp ein unteres bzw. ein oberes Korrelationssignal km, kp. Der Wert dieser beiden Korrelationssignale km, kp in Abhängigkeit von der zeitlichen Verschiebung dt/T des 1-er-Referenzsignals S1 - ohne daß dieses Signal selbst verwendet wird - vom empfangenen 1-er-Spreizcode-Signal S1′ ist in Fig. 2 mittels eines Diagramms dargestellt. Durch Subtrakion des oberen Korrelationssignals kp vom unteren Korrelationssignals km wird die Diskriminatorkennlinie D gebildet, die ebenfalls als kleines Diagramm in Fig. 2 dargestellt ist.

Der Verlauf der Diskriminatorkennlinie D entspricht dem Diskriminatorsignal kd am Ausgang des Subtrahieres sb, dessen Minuend- bzw. Subtrahendeingang mit dem unteren bzw. oberen Korrelationssignal km, kp gespeist ist.

Fig. 3 zeigt im wesentlichen die gleiche Schaltungsanordnung wie Fig.2. Gleiche Teilschaltungen aus Fig.2 und Fig.3 sind mit gleichen Bezugszeichen versehen. Soweit ihre Funktionsweise und ihre Anordnung in der Gesamtschaltung unverändert ist, erübrigt sich eine nochmalige Erörterung. Im Unterschied zu Fig.2 enthält die Schaltungsanordnung nach Fig.3 zusätzlich eine erste und eine zweite Schaltweiche s1, s2. Der besseren Übersichtlichkeit wegen wird die Phasenregelschleife nur unvollständig dargestellt.

Die in Fig.3 dargestellte erfinderische Ergänzung der Grundschaltung von Fig.2 ermöglicht in den meisten Fällen eine raschere Synchronisierung der Phasenregelschleife als bei der Grundschaltung. Dort muß im Außer-Phase-Zustand die Frequenz des Schieberegistertaktes schrittweise so lange verändert werden, bis das Diskriminatorsignal kd anspricht. Bei einer langen Pseudozufallssignal-Periode kann dies lange dauern, wenn die Verschiebung nahezu der Spreizcode-Periode entspricht und die Suchrichtung ungünstig ist. Die Suchzeit läßt sich jedoch halbieren, wenn ein Hilfs-Korrelator mit einem Hilfs-Referenzsignal gespeist wird, das gegenüber dem 1-er-Referenzsignal S1 um die halbe Spreizcode-Periodendauer verzögert ist. Werden in die zeitlichen Zwischenräume weitere Hilfs-Korrelatoren eingefügt, dann wird die Suchezeit weiter verringert, weil das zu überstreichende Suchintervall bis einer der Hilfs-Korrelatoren anspricht immer kleiner wird.

Dieses Verfahren ist in der von Fig.3 dargestellten Schaltungsanordnung realsiert. Außer den aus Fig.2 bekannten 5 Referenzsignalen Sm, S1, Sp, S6, S18 werden mit Hilfe der Schieberegisterverlängerung sh vier Hilfs-Referenzsignale S25, S50, S75, S100 erzeugt, die zusammen mit dem 1-er-Referenzsignal S1 die gesamte Spreizcode-Signalperiode in etwa gleiche Zeitabschnitte aufteilen.

Während des Suchbetriebs werden mittels der zweiten Schaltweiche s2 die vorhandenen fünf Korrelatoren K1 bis K5 mit dem 1-er-Referenzsignal S1 bzw. mit den Hilfs-Referenzsignalen S25, S50, S75, S100 verbunden. Die Ausgangssignale dieser fünf Korrelatoren, nämlich das erste bis fünfte Korrelationssignal k1 bis k5, werden über die erste Schaltweiche s1, die als Multiplexer dient, nacheinander der Steuereinheit st zugeführt und dort bezüglich ihrer Amplituden miteinander verglichen.

Zeigt im Suchbetrieb das Ausgangssignal des ersten Korrelators K1, dessen Steuereingang mit dem 1-er-Referenzsignal S1 gespeist ist, Synchronismus an, dann schaltet die Steuereinheit st sofort vom Suchbetrieb auf den Normalbetrieb entsprechend Fig.2 um. Mittels der zweiten Schaltweiche s2 werden dann in folgender Zuordnung die fünf Korrelatoren K1 bis K5 an das untere-, 1-er-, obere-, 6-er- und 18-er-Referenz-Signal Sm, S1, Sp, S6, S18 angeschlossen. Gleichzeitig mit der Umschaltung der zweiten Schaltweiche s2 über einen Steuerbefehl si2 schaltet die Steuereinheit st über einen weiteren Steuerbefehl si1 die erste Schaltweiche s1 so um, daß die Ausgangssignale der fünf Korrelatoren K1 bis K5 von der Steuereinheit st getrennt werden. Die erste Schaltweiche s1 kann dabei im Multiplex-Betrieb aber auch im stationären Betrieb arbeiten. Als Ausgangssignale liefert sie das erste, zweite und dritte Diodensignal d1, d2, d3 und für den Diskriminator das untere und obere Korrelationssignal km, kp.

Zeigt im Suchbetrieb der mit den Hilfs-Referenzsignalen gesteuerten Korrelatoren K2 bis K5 einen Synchronzustand an, dann programmiert die Steuereinheit st über einen siebenstelligen Einstellbus j das Schieberegister sr um. Die möglichen vier Datensätze sind dabei in einem Speicher der Steuereinheit st abgelegt. Mittels der Neueinstellung des Schieberegisters sr wird dabei gleichsam eine zeitliche Korrektur des Einer-Referenzsignals s1 vorgenommen, wobei die zeitliche Korrektur dem Abstand des 1-er-Referenzsignals S1 vom synchronzustandanzeigenden Hilfs-Referenzsignal entspricht.

Die grundsätzliche Funktionsweise eines Korrelators ki ist in Fig.4 anhand eines vereinfachten Ausführungsbeispiels dargestellt. Aus dem Spreizcode-Signalgemisch dg am Eingang wird mittels einer steuerbaren Stromquelle q ein proportionaler Strom gebildet, der in Abhängigkeit vom Logikpegel eines Speizcode-Referenzsignals Si von einem ersten oder einem zweiten Kondensators c1, c2 integriert wird. Die Steuerung des Stromweges erfolgt über einen ersten und zweiten elektronischen Schalter w1, w2. Während des H-Pegels des Spreizcode-Referenzsignals Si ist der erste Kondensator c1 an die steuerbare Stromquelle q angeschlossen und während des L-Pegels der zweite Kondensator c2. Die gegenphasige Schaltfunktion wird beispielsweise dadurch erreicht, daß der Steuereingang des ersten bzw. zweiten elektronischen Schalters w1, w2 direkt bzw. über einen Inverter ih vom Spreizcode-Referenzsignal Si angesteuert ist.

Die Spannung des ersten bzw. zweiten Kondensators c1, c2 wird mittels eines ersten bzw. zweiten Impedanzwandlers i1, i2 abgegriffen und bildet einen oberen bzw. unteren Signalpegel uh, ul. Durch die Integration mitteln sich alle Signalanteile, die nicht mit dem Spreizcode-Referenzsignal Si korreliert sind heraus, so daß mit zunehmender Integrationszeit die Größe des oberen und unteren Signalpegels im Verhältnis zum Störsignalanteil ständig zunimmt. Ein Subtrahierglied sd am Minuend- bzw. Subtrahend-Eingang ist mit dem oberen bzw. unteren Signalpegel uh, ul gespeist und bildet an seinem Ausgang das gewünschte Korrelatorausgangssignal ki. Durch die Differenzbildung ist das Korrelatorausgangssignal ki auch frei von störenden Gleichanteilen der Übertragungsstrecke. Dies ist wichtig bei Infrarot-Übertragungsstrecken, die durch natürliches oder netzfrequenzabhängiges Umgebungslicht gestört sind.

Fig.5a zeigt in horizontaler Ansicht schematisch die Anordnung dreier Senderdioden D1, D2, D3 in einem Fernbedienungsgeber fg mit ihren Strahlungskeulen und zugeordneten Spreizcode-Signalen S1′, S6′, S18′. Die Strahlungskeule der ersten und dritten Diode D1, D3 zeigen in einem Winkelbereich w, der die Richtung der optischen Achse einschließt, etwa einen gleichmäßigen Intensitätsverlauf. Im Gegensatz dazu zeigt die Strahlungskeule der zweiten Diode D2 in dem horizontal liegenden Winkelbereich w eine starke monotone Änderung der Intensität. Eine horizontale Schwenkung des Fernbedienungsgebers fg bewirkt somit, daß sich die Intensitäten der empfangenen Spreizcode-Signale S1′, S18′ der ersten und dritten Diode D1, D3 kaum ändern, im Gegensatz dazu aber diejenige der zweiten Diode D2.

Fig.5b zeigt für den gleichen Fernbedienungsgeber fg schematisch den Intensitätsverlauf der drei Strahlungskeulen in vertikaler Ansicht. In Richtung des jetzt vertikal liegenden Winkelbereiches w ändern sich die Intensitäten der Strahlungskeulen der ersten und zweiten Diode D1, D2 kaum. Eine monotone, starke Änderung des Intensitätsverlaufs im vertikalen Winkelbereich w zeigt jedoch die Strahlungskeule der dritten Diode D3. Eine vertiale Schwenkung des Fernbedienungsgebers fg beeinflußt somit insbesondere die empfangenen Intensitäten des 18-er-Spreizcode-Signals S18′. Die in horizontaler und vertikaler Richtung etwa gleichförmige Strahlungskeule der ersten Dioden D1 dient für die Übertragungsstrecke als Referenzgröße. Das ihr zugeordnete erste Diodensignal d1 weist somit unabhängig von der mannuellen Ausrichtung einen etwa gleichbleibenden Signalpegel auf, der in einer nachfolgenden Auswerteschaltung als Bezugsgröße für das zweite und dritte Diodensignal d2, d3 dient.

## Patentansprüche

1. Elektrooptische Übertragungsstrecke für eine Fernbedienungseinrichtung,
- mit Einrichtungen zur Erzeugung von Spreizcode-Signalen (Si′, S6′, S18′) auf der Senderseite, die zu einem Spreizcode-Signalgemisch (dg) zusammengefaßt sind, und Einrichtungen zur Erzeugung von Referenzsignalen (S1, S6, S18) auf der Empfängerseite, die synchron zu den Spreizcode-Signalen sind,
- mit Korrelationseinrichtungen, um auf der Empfängerseite das empfangene Spreizcode-Signalgemisch (dg) in seine einzelnen Komponenten (d1, d2, d3) zu trennen und deren jeweiligen Signalhöhen zu bestimmen und
- mit Synchronisationseinrichtungen, um die zusammengehörigen Spreizcode- und Referenzsignale auf der Sender- und Empfängerseite zu synchronisieren,
gekennzeichnet durch folgende Merkmale:
- die Spreizcode-Signale weisen jeweils identische Datenfolgen auf, die jedoch gegeneinander um eine vorgegebene Anzahl von Datentakten verschoben sind,
- die Synchronisationseinrichtungen enthalten hintereinandergeschaltet in einer Phasenregelschleife in Signalflußrichtung einen Phasendiskriminator (K1, K3, sb), ein Schleifenfilter (sf), einen ziehbaren Oszillator (os) und einen Taktgeber (tg), der den Datentakt der Referenzsignale (S1, S6, S18) bestimmt, und
- die Synchronisationseinrichtung enthält ferner eine Steuereinheit (st), die im Falle von Phasenabweichungen, die vom Phasendiskriminator (K1, K3, sb) nicht mehr erfaßt werden, den Taktgeber (tg) über Steuersignale veranlaßt, seine Taktrate mittels zusätzlicher oder ausgelassener Impulse schrittweise zu erhöhen oder zu erniedrigen.

2. Übertragungsstrecke nach Anspruch 1, dadurch gekennzeichnet, daß die zu unterscheidenden Spreizcode- und die zugehörigen Referenzsignale jeweils mittels eines Schieberegisters (sr, sh) gebildet sind, das am Eingang mit einem Spreizcode-Grundsignal bzw. Referenzgrundsignal (So) gespeist ist und an dessen Schieberegisterabgriffen die Spreizcode-Signale (S1′, S6′, S18′) bzw. Referenzsignale (S1, S6, S18) abzugreifen sind, wobei für zusammengehörige Spreizcode- und Referenzsignale die abgegriffenen Schieberegisterstufen auf der Sender- bzw. Empfängerseite gleichen Taktabstand vom jeweiligen Schieberegistereingang aufweisen.

3. Übertragungsstrecke nach Anspruch 1, dadurch gekennzeichnet, daß die Korrelationseinrichtungen für jedes zu empfangende Spreizcode-Signal einen Korrelator (K1, K2, K3) enthalten, dessen Signaleingang mit dem empfangenen Spreizcode-Signalgemisch (dg) und dessen Steuereingang mit dem zugehörigen Referenzsignal (S1, S2, S3) gespeist ist und an dessen Ausgang die integrierte Signalhöhe der zugehörigen Komponente des Spreizcode-Signalgemisches (dg) als Diodensignal (d1, d2, d3) abgreifbar ist.

4. Übertragungsstrecke nach Anspruch 1, gekennzeichnet durch folgende Merkmale:
- während des Suchbetriebs werden mittels des Schieberegisters (sr) und einer Schieberegisterverlängerung (sh) eine Anzahl von Hilfs-Referenzsignalen (S25, S50, S75, S100) erzeugt, deren zeitliche Bezugspunkte die Spreizcode-Periode in möglichst gleiche Zeitintervalle einteilen,
- dem 1-er-Referenzsignal (S1) und jeden dieser Hilfs-Referenzsignale (S25, S50, S75, S100) ist ein Korrelator (K1, ...K5) zugeordnet, deren Signaleingang mit dem Spreizcode-Signalgemisch (dg) und deren Steuereingang mit dem 1er- bzw. mit einem dieser Hilfs-Referenzsignale gespeist ist und deren Ausgangssignale als Korrelationssignale (k1, ... k5) der Steuereinheit (st) zugeführt sind,
- die Steuereinheit (st) beendet den Suchbetrieb, wenn mindestens eines der Korrelationssignale (k1, ...k5) einen abweichenden Zustand anzeigt, und
- das abweichende Korrelationssignal (k1, ...k5) löst über die Steuereinheit (st) eine zeitliche Korrektur des 1-er-Referenzsignals (S1) aus, wobei die zeitliche Korrektur genau gleich der Verzögerungszeit des abweichenden Hilfs-Referenzsignals (S25, S50, S75, S100) gegenüber dem 1-er-Referenzsignal (S1) ist.

5. Übertragungsstrecke nach Anspruch 4, gekennzeichnet durch folgende Merkmale:
- die Einrichtungen zur Erzeugung von Referenzsignalen (S1, S6, S18) enthalten das Schieberegister (sr) und ein Antivalenzglied (g),
- der Eingang des vom Taktgenerator (tg) gesteuerten Schieberegisters (sr) ist mit dem Ausgang des Antivalenzgliedes (g) verbunden,
- die Eingänge des Antivalenzgliedes (g) sind an einzelne Stufen des Schieberegisters (sr) angeschlossen und
- alle Stufen des Schieberegisters (sr) sind über einen Einstellbus (j) von der Steuereinheit (st) beliebig einstellbar.

6. Übertragungsstrecke nach Anspruch 4, gekennzeichnet durch folgende Merkmale:
- die Ausgänge der Korrelatoren (K1, ...K5) sind auf eine erste Schaltweiche (s1) geführt, die im Suchbetrieb die Ausgangssignale dieser Korrelatoren mit der Steuereinheit (st) verbindet,
- zwischen die Korrelatoren (K1, ...K5) und Schieberegister (sr) mit der Schieberegisterverlängerung (sh) ist eine zweite Schaltweiche (s2) eingefügt, welche im Suchbetrieb die Umschaltung der nichtbenötigten Referenzsignale (Sm, Sp, S6, S18) auf die Hilfs-Referenzsignale (S25, S50, S75, S100) durchführt und
- die Steuerung der ersten und der zweiten Schaltweiche (s1, s2) erfolgt durch die Steuereinheit (st).

7. Übertragungsstrecke nach Anspruch 4, dadurch gekennzeichnet, daß die erste Schaltweiche (s1) im Multiplexbetrieb arbeitet.

8. Übertragungsstrecke nach Anspruch 1, gekennzeichnet durch folgende Merkmale:
- der Phasendiskriminator (K1, K3, sb) enthält einen ersten und einen zweiten Korrelator (K1, K3) und einen Subtrahierer (sb),
- der Steuereingang des ersten bzw. zweiten Korrelators (K1, K3) ist mit einem unteren bzw. einem oberen Referenzsignal (Sm, Sp) gespeist, das der Sollphase des 1-er-Referenzsignals (S1) um eine halbe Datenperiode T/2 vor- bzw. nacheilt, und
- der Ausgang des ersten bzw. zweiten Korrelators (K1, K3) ist mit dem Minuend- bzw. Subtrahendeingang des Subtrahierers (sb) verbunden, dessen Ausgang das Diskriminatorsignal (kd) für die Phasenregelschleife bildet.

9. Übertragungsstrecke nach einem der Ansprüche 1 bis 8, gekennzeichnet durch folgende Merkmale:
- die Sendeeinrichtung strahlt über mindestens drei optoelektronische Sendedioden (D1, D2, D3) Spreizcode-Signale (Si′, S6′, S18′) mit räumlich unterschiedlichen Strahlungskeulen aus,
- die eine Strahlungskeule der ersten Sendediode (D1) dient als Bezugsgröße und die Strahlungskeulen der zweiten bzw. dritten Sendediode (D2, D3) sind in horizontaler bzw. vertikaler Richtung in einem vorgegebenen Winkelbereich (w) im Vergleich zur Bezugsgröße in ihrer Intensität monoton zu- oder abnehmend, und
- auf der Empfängerseite werden über die zugehörigen Korrelationssignale (d1, d2, d3) die Winkelgrößen in horizontaler und vertikaler Richtung zwischen der optischen Achse (o) der ersten Sendediode (D1) und der Verbindungslinie zwischen Sender und Empfänger bestimmt.

## Claims

1. An electrooptical transmission link for a remote-control system, comprising
- means for generating spread-spectrum signals (Si′, S6′, S18′) at the transmitting end, the spread-spectrum signals being combined into a composite spread-spectrum signal (dg), and means for generating reference signals (S1, S6, S18) at the receiving end which are synchronous with the spread-spectrum signals,
- correlation means at the receiving end for separating the received composite spread-spectrum signal (dg) into its individual components (d1, d2, d3) and determining the respective signal heights of said components, and
- synchronizing means at the transmitting and receiving ends for synchronizing the spread-spectrum and reference signals belonging together,
characterized by the following features:
- The spread-spectrum signals have identical data sequences which are shifted with respect to each other by a predetermined number of data clock pulse periods;
- the synchronizing means include a phase-locked loop comprising in series, in the direction of signal flow, a phase discriminator (K1, K3, sb), a loop filter (sf), a locked oscillator (os), and a clock generator (tg) which determines the data rate of the reference signals (S1, S6, S18); and
- the synchronizing means further include a control unit (st) which, in the event of phase deviations which are not detected by the phase discriminator (K1, K3, sb), causes the clock generator (tg) via control signals to increase or decrease its clock rate step by step by adding or omitting pulses.

2. A transmission link as claimed in claim 1,
characterized in that the spread-spectrum signals to be distinguished and the reference signals belonging thereto are formed by means of respective registers (sr, sh) which are fed with a spread-spectrum basic signal and a basic reference signal (So), respectively, and from whose taps the spread-spectrum signals (S1′, S6′, S18′) and the reference signals (S1, S6, S18), respectively, are obtainable, and that for spread-spectrum and reference signals belonging together, the tapped shift-register stages at the transmitting and receiving ends are spaced the same clock distance from the respective shift register inputs.

3. A transmission link as claimed in claim 1,
characterized in that for each spread-spectrum signal to be received, the correlation means include a correlator (K1, K2, K3) whose signal input is supplied with the received composite spread-spectrum signal (dg) and whose control input is supplied with the associated reference signal (S1, S2, S3) and whose output provides the integrated signal height of the associated component of the composite spread-spectrum signal (dg) as a diode signal (d1, d2, d3).

4. A transmission link as claimed in claim 1, characterized by the following features:
- During the search mode, a number of auxiliary reference signals (S25, S50, S75, S100) whose temporal reference points divide the spread-spectrum-signal period into as equal time intervals as possible are generated by means of the shift register (sr) and an extension shift register (sh);
- the stage-1 reference signal (S1) and each of said auxiliary reference signals (S25, S50, S75, S100) is assigned a correlator (K1, ..., K5) whose signal inputs are supplied with the composite spread-spectrum signal (dg) and whose control inputs are supplied with the stage-1 reference signal and one of said auxiliary reference signals, respectively, and whose outputs are fed as correlation signals (k1, ..., k5) to the control unit (st);
- the control unit (st) terminates the search mode when at least one of the correlation signals (k1, ..., k5) indicates a deviating state, and
- the deviating correlation signal (k1, ..., k5) initiates, via the control unit (st), a temporal correction of the stage-1 reference signal (S1), said temporal correction being exactly equal to the delay of the deviating auxiliary reference signal (S25, S50, S75, S100) with respect to the stage-1 reference signal (S1).

5. A transmission link as claimed in claim 4, characterized by the following features:
- The means for generating reference signals (S1, S6, S18) include a shift register (sr) and an exclusive-OR gate (g);
- the input of the shift register (sr), which is controlled by the clock generator (tg), is connected to the output of the exclusive-OR gate (g);
- the inputs of the exclusive-OR gate (g) are coupled to individual stages of the shift register (sr), and
- all stages of the shift register (sr) are arbitrarily adjustable by the control unit (st) via a bus (j).

6. A transmission link as claimed in claim 4, characterized by the following features:
- the outputs of the correlators (K1, ..., K5) are coupled to a first switching unit (s1) which in the search mode transfers the outputs of said correlators to the control unit (st);
- between the correlators (K1, ..., K5) and the shift register (sr) with the extension shift register (sh), a second switching unit (s2) is inserted which in the search mode performs the switching from the unneeded reference signals (Sm, Sp, S6, S18) to the auxiliary reference signals (S25, S50, S75, S100), and
- the first and second switching units (s1, s2) are controlled by the control unit (st).

7. A transmission link as claimed in claim 4, characterized in that the first switching unit (s1) operates in a multiplex mode.

8. A transmission link as claimed in claim 1, characterized by the following features:
- The phase discriminator (K1, K3, sb) contains a first correlator (K1), a second correlator (K3), and a subtracter (sb);
- the control input of the first correlator (K1) is fed with a lower reference signal (Sm) which leads the desired phase of the stage-1 reference signal (S1) by half a data pulse period T/2, and the control input of the second correlator (K3) is fed with an upper reference signal (Sp) which lags the desired phase of the stage-1 reference signal (S1) by half a data pulse period T/2, and
- the outputs of the first and second correlators (K1, K3) are connected to the minuend and subtrahend inputs, respectively, of the subtracter (sb), whose output forms the discriminator signal (kd) for the phase-locked loop.

9. A transmission link as claimed in any one of claims 1 to 8, characterized by the following features:
- The transmitter transmits spread-spectrum signals (Si′, S6′, S18′) with spatially different radiation lobes via at least three optoelectronic transmitting diodes (D1, D2, D3);
- the radiation lobe of the first transmitting diode (D1) serves as a reference quantity, and the radiation lobes of the second and third transmitting diodes (D2, D3), in the horizontal and vertical directions, respectively, increase or decrease in intensity monotonically in comparison with the reference quantity within a predetermined angular range (w), and
- at the receiving end, the angular dimensions in the horizontal and vertical directions between the optical axis (o) of the first transmitting diode (D1) and the line joining the transmitter and the receiver are determined via the associated correlation signals (d1, d2, d3).

## Revendications

1. Section de transmission électro-optique pour un dispositif de télécommande, comportant
- des dispositifs pour produire, côté émission, des signaux de code d'étalement (S1′,S6′,S18′), qui sont réunis pour former un mélange de signaux de code d'étalement (dg), et des dispositifs pour produire, côté réception, des signaux de référence (S1,S6,S18), qui sont synchrones avec les signaux de code d'étalement,
- des dispositifs de corrélation pour séparer, côté réception, le mélange reçu de signaux de code d'étalement (dg) en ses composantes (d1,d2,d3) et déterminer les amplitudes respectives de leurs signaux, et
- des dispositifs de synchronisation pour synchroniser les signaux de code d'étalement et les signaux de référence, associés, sur le côté émission et sur le côté réception,
caractérisée par les caractéristiques suivantes :
- les signaux de code d'étalement possèdent des suites respectivement identiques de données, qui sont cependant décalées réciproquement d'un nombre prédéterminé de cadences de données,
- les dispositifs de synchronisation contiennent, selon un montage en série dans la direction de transmission de signaux, une boucle de régulation de phase, un discriminateur de phase (K1,K3,Sb), un filtre de boucle (sf), un oscillateur pouvant être asservi (os) et un générateur de cadence (tg), qui détermine la cadence de données des signaux de référence (S1,S6,S18), et
- le dispositif de synchronisation contient en outre une unité de commande (st) qui, dans le cas d'écarts de phase, qui ne sont plus détectés par le discriminateur de phase (K1,K3,sb), déclenche le générateur de cadence (tg) au moyen de signaux de commande pour qu'il augmente ou réduise pas-à-pas sa cadence de données à l'aide d'addition d'impulsions ou de suppression d'impulsions.

2. Section de transmission selon la revendication 1, caractérisée en ce que les signaux de code d'étalement devant être différenciés et les signaux de référence associés sont formés respectivement au moyen d'un registre à décalage (sr, sh), qui reçoit à son entrée un signal de base de code d'étalement ou un signal de base de référence (So) et sur les prises duquel peuvent être prélevés les signaux de code d'étalement (S1′,S6′,S18′) ou les signaux de référence (S1,S6,S18), les étages à prises du registre à décalage possédant, sur le côté émission et le côté réception, un même intervalle de cadence par rapport à l'entrée respective du registre à décalage, pour des signaux de code d'étalement et des signaux de référence, associés.

3. Section de transmission selon la revendication 1, caractérisée en ce que les dispositifs de corrélation pour chaque signal de code d'étalement devant être reçu contiennent un corrélateur (K1,K2,K3), dont l'entrée des signaux est alimentée par le mélange reçu de signaux de code d'étalement (dg) et dont l'entrée de commande est alimentée par le signal de référence associé (S1,S2,S3) et à la sortie duquel peut être prélevée une amplitude de signal intégrée des composantes associées du mélange de signaux de code d'étalement (dg), en tant que signal de diode (d1,d2, d3).

4. Section de transmission selon la revendication 1, caractérisée par les caractéristiques suivantes :
- pendant le fonctionnement de recherche, à l'aide du registre à décalage (sr) et d'un prolongement (ss) du registre à décalage sont formés un nombre de signaux auxiliaires de référence (S25, S50, S75, S100) dont les instants de référence divisent la période de code d'étalement en des intervalles de temps aussi égaux que possible,
- au 1-er signal de référence (S1) et à chacun de ces signaux auxiliaires de référence (S25,S50,S75,S100) est associé un corrélateur (K1,...K5), dont l'entrée des signaux est alimentée par le mélange de signaux de code d'étalement (dg) et dont l'entrée de commande est alimentée par le premier signal de référence ou l'un de ces signaux auxiliaires de référence, et dont les signaux de sortie sont envoyés en tant que signaux de corrélation (k1,...k5) à l'unité de commande (st),
- l'unité de commande (st) interrompt le fonctionnement de recherche lorsqu'au moins l'un des signaux de corrélation (k1,...k5) indiquent un état différent, et
- le signal de corrélation différent (k1,...k5) déclenche, par l'intermédiaire de l'unité de commande (st), une correction dans le temps du 1-er signal de référence (S1), la correction dans le temps étant précisément égale au retard du signal auxiliaire de référence différent (S25, S50, S75, S100) par rapport au 1-er signal de référence (S1).

5. Section de transmission selon la revendication 4, caractérisée par les caractéristiques suivantes :
- les dispositifs pour produire des signaux de référence (S1,S6,S18) contiennent le registre à décalage (sr) et un circuit d'antivalence (g),
- l'entrée du registre à décalage (sr) commandé par le générateur de cadence (tg) est reliée à la sortie du circuit d'antivalence (g),
- les entrées du circuit d'antivalence (g) sont raccordées à différents étages du registre à décalage (sr), et
- tous les étages du registre à décalage (sr) peuvent être réglés à volonté dans l'unité de commande (st), par l'intermédiaire d'un bus de réglage (j).

6. Section de transmission selon la revendication 4, caractérisée par les caractéristiques suivantes :
- les sorties des corrélateurs (K1,...K5) sont raccordées à un premier aiguillage de commutation (s1), qui, lors du fonctionnement de recherche, envoie les signaux de sortie de ces corrélateurs à l'unité de commande (sr),
- entre les corrélateurs (K1,...K5) et le registre à décalage (sr) pourvu de son prolongement (sh) est inséré un second aiguillage de commutation (s2) qui, lors du fonctionnement de recherche, exécute la commutation des signaux de référence non nécessaires (Sm, Sp, S6, S18) aux signaux auxiliaires de référence (S25, S50, S75, S100), et
- la commande des premier et second aiguillages de commutation (s1,s2) s'effectue au moyen de l'unité de commande (st).

7. Section de transmission selon la revendication 4, caractérisée en ce que le premier aiguillage de commutation (s1) fonctionne selon le fonctionnement multiplex.

8. Section de transmission selon la revendication 1, caractérisée par les caractéristiques suivantes :
- le discriminateur de phase (K1,K3,sb) contient des premier et second corrélateurs (K1,K3) et un soustracteur (sb),
- l'entrée de commande des premier et second corrélateurs (K1,K3) est alimentée par un signal de référence inférieur ou un signal de référence supérieur (Sm, Sp), qui fait avancer ou reculer d'une demi-période de données T/2 la phase de consigne du 1-er signal de référence (S1), et
- la sortie des premier et second corrélateurs (K1,K3) est reliée à l'entrée du minuende et à l'entrée du nombre à soustraire du soustracteur (Sb), dont la sortie forme le signal de discrimination (kd) pour la boucle de régulation de phase.

9. Section de transmission selon l'une des revendications 1 à 8, caractérisée par les caractéristiques suivantes :
- le dispositif d'émission émet, par l'intermédiaire d'au moins trois diodes émissives optoélectroniques (D1,D2,D3), les signaux de code d'étalement (S1′,S6′,S18′) présentant des lobes de rayonnement qui sont spatialement différents,
- un lobe de rayonnement de la première diode émissive (D1) sert de grandeur de référence et les lobes de rayonnement des seconde et troisième diodes émissives (D2,D3) ont une intensité qui augmente ou diminue de façon monotone dans la direction horizontale ou verticale, dans une plage angulaire (w) prédéterminée, par rapport à la grandeur de référence, et
- côté réception, les valeurs, comptées dans la direction horizontale et dans la direction verticale, de l'angle entre l'axe optique (o) de la première diode émissive (D1) et la droite reliant l'émetteur et le récepteur sont déterminées par l'intermédiaire de signaux associés de corrélation (d1,d2,d3).
